Europäisches Patentamt

European Patent Office

Office européen des brevets

(11) Veröffentlichungsnummer: **0 469 277 A1**

# EUROPÄISCHE PATENTANMELDUNG

(21) Anmeldenummer: **91110154.1**

(22) Anmeldetag: **20.06.91**

(51) Int. Cl.5: **F01N 3/02**, F01N 7/08

(30) Priorität: **31.07.90 DE 4024215**

(43) Veröffentlichungstag der Anmeldung:
**05.02.92 Patentblatt 92/06**

(84) Benannte Vertragsstaaten:
**AT BE CH DE DK ES FR IT LI LU NL SE**

(71) Anmelder: **DIDIER-WERKE AG**
**Lessingstrasse 16-18**
**W-6200 Wiesbaden(DE)**

(72) Erfinder: **Kalfa, Horst**
**Burchter Strasse 2**
**W-6270 Idstein(DE)**
Erfinder: **Thalheim, Dietmann**
**Offersfuhrstrasse 5**
**W-6050 Offenbach(DE)**
Erfinder: **Jenrich, Thilo**
**Dotzheimer Strasse 58**
**W-6200 Wiesbaden(DE)**

(74) Vertreter: **Brückner, Raimund, Dipl.-Ing.**
**c/o Didier-Werke AG Lessingstrasse 16-18**
**W-6200 Wiesbaden(DE)**

(54) **Filterapparat.**

(57) Bei einem Filterapparat in dem Abgasstrom eines Verbrennungsmotors, insbesondere Dieselmotors, soll der Strömungswiderstand gesenkt werden. Hierfür ist der freie Querschnitt der Austrittsöffnung (12), an der der Abgasstrom in die Umgebung austritt, im wesentlichen wenigstens ebenso groß wie der Strömungsquerschnitt im Filterapparat (1).

FIG.1

Die Erfindung betrifft einen Filterapparat im Abgasstrom eines Verbrennungsmotors, insbesondere Dieselmotors, wobei das gefilterte Abgas an einer Austrittsöffnung in die Umgebung entweicht.

In der Firmenschrift Auto und Umwelt, Daimler-Benz AG, Stuttgart, Mai 1985, Seiten 24 bis 28, sind Rußpartikelfilter beschrieben. Auch in der EP 0 154 145 B1 sind solche Filterapparate dargestellt. Bei all diesen Filterapparaten ist davon ausgegangen, daß reingasseitig ein Abgasrohr anschließt, dessen Querschnitt beträchtlich kleiner als der Strömungsquerschnitt im Filterapparat ist. Dadurch entstehen in der Abgasleitung zusätzliche Druckverluste. Diese sind für den Betrieb des Verbrennungsmotors ungünstig.

Aufgabe der Erfindung ist es, bei einem Filterapparat der eingangs genannten Art den Strömungswiderstand im Abgasstrom zu senken.

Erfindungsgemäß ist obige Aufgabe bei einem Filterapparat der eingangs genannten Art dadurch gelöst, daß der freie Querschnitt der Austrittsöffnung im wesentlichen wenigstens ebenso groß ist wie der Strömungsquerschnitt im Filterapparat und daß die Austrittsöffnung an der Reingasseite des Filterapparats vorgesehen ist.

Dabei ist also zwischen der Reingasseite des Filterapparats und der Austrittsöffnung kein den Strömungsquerschnitt gegenüber dem Filterapparat verengendes Abgasrohr vorgesehen. Der Querschnitt der Austrittsöffnung ist damit wesentlich größer als beim Stand der Technik. Damit ist der strömungswiderstand im Abgasstrom gesenkt. Dementsprechend sind auch die Druckverluste im Abgasstrom verkleinert. Insgesamt ist der Gesamtdruck im Abgassystem niedriger als beim Stand der Technik. Dadurch sind negative Auswirkungen der Rußpartikelfiltration auf die Betriebsdaten des Verbrennungsmotors gemindert.

Bei der Erfindung ist die Ausströmgeschwindigkeit des Abgases an der Austrittsöffnung kleiner als beim Stand der Technik. Sie verteilen sich gleichmäßiger in die Umgebung, so daß Überhitzungen entfallen.

Günstig ist auch, daß die Baugröße verringert ist, da das Abgasrohr entfällt.

In bevorzugter Ausgestaltung der Erfindung weist der Filterapparat schalldämpfende Eigenschaften auf. Ein zusätzlicher Schalldämpfer erübrigt sich dann.

In Weiterbildung der Erfindung sind an der Austrittsöffnung mehrere Blenden angeordnet. Diese dienen einerseits der Lenkung des Abgasstromes. Andererseits sollen sie Beschädigungsmöglichkeiten und Verschmutzungen des Filterapparats von außen her unterbinden.

Weitere vorteilhafte Ausgestaltungen der Erfindung ergeben sich aus den Unteransprüchen und der folgenden Beschreibung von Ausführungsbeispielen. In der Zeichnung zeigen:

Figur 1    einen Filterapparat im Längsschnitt,
Figur 2    eine Teilansicht einer Alternative zu Figur 1.

Ein Filterapparat (1) ist mit einem Anschlußstutzen (2) an einen Abgasauslaß eines Dieselmotors angeschlossen. Der Dieselmotor kann ein stationärer Dieselmotor oder der Dieselmotor eines Kraftfahrzeugs sein.

Vom Anschlußstutzen (2) erweitert sich der Filterapparat (1) trichterförmig zu einem zylindrischen Mantel (3). In diesen sind ein stützendes Deckblech (4) und ein Bodenblech (5) eingebaut. Zwischen dem Deckblech (4) und dem Bodenblech (5) sind Filterhülsen oder Filterkerzen (6) befestigt. Das Deckblech (4) weist Öffnungen (7) auf, die in den Innenraum (8) des Filterapparats (1) führen. Dieser Innenraum (8) ist durch das Bodenblech (5) vom Reingas- oder Endraum (11) getrennt. Die Filterkerzen (6) sind mit dem Bodenblech (5) staubdicht verbunden. Das Bodenblech (5) weist Öffnungen (9) auf, die den Innenraum (8) der Filterkerzen (6) mit dem Endraum (11) verbinden. Die Gesamtquerschnittsfläche der Öffnungen (9) bestimmt den freien Strömungsquerschnitt des Abgases im Filterapparat (1).

Die aus feuerfestem, keramischem Material bestehenden Filterkerzen (6) und deren Anordnung im Mantel (3) wird so gewählt, daß eine ausreichende Schallabsorption gegeben ist.

Anstelle der einzelnen Filterkerzen (6) kann auch ein wabenförmiger Filterkörper aus keramischem Material oder eine Schüttung aus keramischem Material vorgesehen sein.

Am Mantel (3) schließt sich an das Bodenblech (5) in Richtung der Abgasströmung ein Endraum (11) an. In diesem münden alle Öffnungen (9) des Bodenblechs (5). Der Endraum (11) bildet eine zur Umgebung offene Austrittsöffnung (12). Deren freier Querschnitt ist wenigstens ebenso groß wie die Summe der Öffnungsquerschnitte aller Öffnungen (9). Der Endraum (11) bildet dabei praktisch keinen Strömungswiderstand für das aus den Öffnungen (9) austretende Abgas.

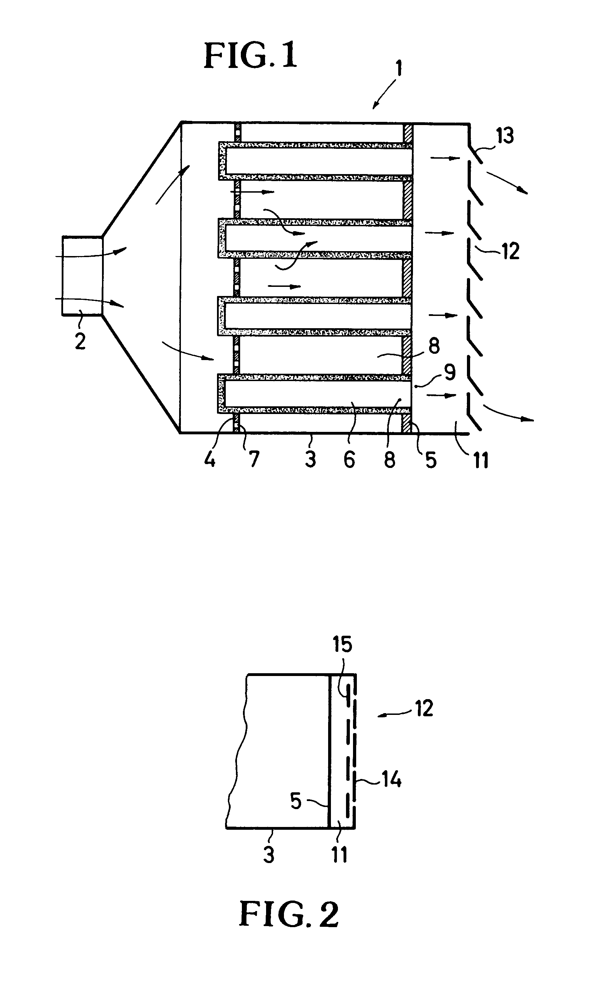

An der Austrittsöffnung (12) sind mehrere Blenden angeordnet. Diese sind beim Ausführungsbeispiel nach Figur 1 von schrägen Blechlamellen (13) gebildet. Durch die Ausrichtung der Blechlamellen (13) läßt sich eine gewünschte Richtung des Ausströmens des Abgases aus der Austrittsöffnung (12) vorbestimmen. Beim Ausführungsbeispiel nach Figur 1 weisen alle Blechlamellen (13) gegenüber der Längsachse (L) des Filterapparats (1) schräg nach unten. Dementsprechend wird das Abgas schräg nach unten abgeleitet. Außerdem ist dadurch erreicht, daß schräg von oben kommendes Spritzwasser, Regenwasser oder Staub nicht in den Endraum (11) eindringen kann.

Es wäre jedoch auch möglich, nur die oberhalb der Längsachse (L) liegenden Blechlamellen (13) nach unten auszurichten und die unterhalb der Längsachse (L) liegenden Blechlamellen (13) nach oben auszurichten. Dadurch ließe sich eine Konzentration des Abgasstromes in Richtung der Längsachse (L) erreichen.

Anstelle der Blechlamellen (13) könnte an der Austrittsöffnung (12) auch ein Schutzgitter aus Streckmetall angeordnet sein. Dieses verhindert, daß unerwünschte Mengen von Spritzwasser durch die Öffnungen (9) zu den Filterkerzen (6) vordringen. Aus dem Endraum (11) kann Spritzwasser abfließen. Beim Ausführungsbeispiel nach Figur 2 sind an der Austrittsöffnung (12) voneinander beabstandet ein Außengitter (14) und ein Innengitter (15) angeordnet, die auf Lücke gegeneinander versetzt sind. Die beiden Gitter (14, 15) bilden ein Labyrinth, das ein Vordringen von Spritzwasser zu den Filterkerzen (6) verhindert. Eine Ausrichtung der Abgasströmung erfolgt hierbei nicht. Das die Austrittsöffnung (12) verlassende Abgase verteilt sich diffus in die Umgebung.

**Patentansprüche**

1. Filterapparat im Abgasstrom eines Verbrennungsmotors, insbesondere Dieselmotors, wobei das gefilterte Abgas an einer Austrittsöffnung in die Umgebung entweicht, dadurch gekennzeichnet,
daß der freie Querschnitt der Austrittsöffnung (12) im wesentlichen wenigstens ebenso groß ist wie der Strömungsquerschnitt im Filterapparat (1) und daß die Austrittsöffnung (12) an der Reingasseite des Filterapparats (1) vorgesehen ist.

2. Filterapparat nach Anspruch 1,
dadurch gekennzeichnet,
daß der freie Querschnitt der Austrittsöffnung (12) wenigstens ebenso groß ist wie die Summe der Öffnungsquerschnitte der Öffnungen (9) eines Bodenblechs (5) des Filterapparats (1), durch die das gefilterte Abgas austritt.

3. Filterapparat nach Anspruch 2,
dadurch gekennzeichnet,
daß der Filterapparat (1) zwischen dem Bodenblech (5) und der Austrittsöffnung (12) einen Endraum (11) bildet.

4. Filterapparat nach einem der vorhergehenden Ansprüche,
dadurch gekennzeichnet,
daß er schalldämpfende Eigenschaften aufweist.

5. Filterapparat nach einem der vorhergehenden Ansprüche, dadurch gekennzeichnet, daß an der Austrittsöffnung (12) mehrere Blenden (13, 14, 15) angeordnet sind.

6. Filterapparat nach Anspruch 5,
dadurch gekennzeichnet,
daß die Blenden von Blechlamellen (13) gebildet werden, die die Abgasausströmung ausrichten.

7. Filterapparat nach Anspruch 5,
dadurch gekennzeichnet,
daß die Blenden ein Außengitter (14) und ein Innengitter (15) aufweisen, die ein Labyrinth bilden.

# FIG.1

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-635 654   (BALZI)<br>* Seite 2, linke Spalte, Zeilen 43-46,54-65; Seite 2, rechte Spalte, Zeilen 16-34; Figur 1 *<br>– – – | 1,5 | F 01 N 3/02<br>F 01 N 7/08 |
| A | DE-A-3 815 148   (EBERSPÄCHER)<br>* Spalte 2, Zeile 52 - Spalte 3, Zeile 10; Figur 1 *<br>– – – | 1-3 | |
| A | US-A-3 404 750   (POWERS et al.)<br>* Insgesamt *<br>– – – – – | 4 | |

**RECHERCHIERTE SACHGEBIETE (Int. Cl.5)**

F 01 N

Der vorliegende Recherchenbericht wurde für alle Patentansprüche erstellt

| Recherchenort | Abschlußdatum der Recherche | Prüfer |
|---|---|---|
| Den Haag | 07 November 91 | KLINGER T.G. |